# EUROPÄISCHE PATENTANMELDUNG

(11) **EP 1 215 470 A2**
(43) Veröffentlichungstag der Anmeldung: **19.06.2002**
(21) Anmeldenummer: 01126956.0
(22) Anmeldetag: 13.11.2001
(51) Int. Cl.: G01D 11/24, G01D 5/39

(54) **Gehäuse mit getrennter Mess- und Anzeigevorrichtung**

(30) Priorität: 15.12.2000 DE 10062668
(71) Anmelder: BSH Bosch und Siemens Hausgeräte GmbH, 81669 München (DE)
(72) Erfinder: Holzer, Stefan, Dr., 89537 Giengen (DE)

(57) **Zusammenfassung**

Die Erfindung betrifft eine Mess- und Anzeigevorrichtung eines Hausgerätes, wobei das Hausgerät einen ortsfesten und mindestens einen beweglichen Gehäuseteil umfasst, wobei die Mess- und Anzeigevorrichtung mindestens einen Messwertaufnehmer, mindestens einen Messwertumformer, mindestens eine Auswerteelektronik und mindestens ein Anzeigeelement umfasst. Dazu wird eine vom Messwertumformer bereitgestellte messwertabhängige Größe einem Sender zugeführt. Gegenüber des Senders ist am anderen Gehäuseteil ein Empfänger angeordnet, wobei der Sender durch eine von der messwertabhängigen Größe gesteuerte Energieabstrahlung unmittelbar auf den Empfänger wirkt. Die vom Empfänger drahtlos empfangene Energieeinstrahlung wird in der Auswerteeinheit in eine im Anzeigeelement darstellbare Information gewandelt. Mit der vorliegenden Erfindung wird eine Mess- und Anzeigevorrichtung geschaffen, die abstandsvariabel, sicher und wartungsfrei ist.

## Beschreibung

Die Erfindung betrifft eine Mess- und Anzeigevorrichtung eines Hausgerätes, wobei das Hausgerät einen ortsfesten und mindestens einen beweglichen Gehäuseteil umfasst, wobei die Mess- und Anzeigevorrichtung mindestens einen Messwertaufnehmer, mindestens einen Messwertumformer, mindestens eine Auswerteelektronik und mindestens ein Anzeigeelement umfasst.

Es sind derartige Mess- und Anzeigevorrichtungen bekannt. Bei diesen wird der Messwert entweder über eine Kabelverbindung oder über mechanische Kontakte zwischen dem festen und dem beweglichen Gehäuseteil übertragen. Bei Hausgeräten ist es häufig erforderlich, z.B. den Anschlag einer Tür alternativ rechts und links vorzusehen. Hierfür wäre es erforderlich, den feststehenden und den beweglichen Gehäuseteil mit Verdrahtungen für beide Varianten vorzubereiten, die alternativ angeschlossen werden können. Dies ist aufwendig und teuer. Bei einer mechanischen Übertragung durch Kontakte müssen der ortsfeste und der bewegliche Gehäuseteil aneinander angepasst werden. Ist beispielsweise der Abstand zwischen den Kontaktpartnern zu groß, funktioniert die Übertragung nicht zuverlässig.

Der vorliegenden Erfindung liegt daher die Problemstellung zugrunde, eine Mess- und Anzeigevorrichtung zu entwickeln, die abstandsvariabel, sicher und wartungsfrei ist. Gleichzeitig soll sie für unterschiedliche Varianten einer Verbindung zwischen einem ortsfesten und einem beweglichen Gehäuseteil geeignet sein.

Diese Problemstellung wird mit den Merkmalen des Hauptanspruches gelöst. Dazu wird eine vom Messwertumformer bereitgestellte messwertabhängige Größe einem Sender zugeführt. Gegenüber des Senders ist am anderen Gehäuseteil ein Empfänger angeordnet, wobei der Sender durch eine von der messwertabhängigen Größe gesteuerte Energieabstrahlung unmittelbar auf den Empfänger wirkt. Die vom Empfänger drahtlos empfangene Energieeinstrahlung wird in der Auswerteelektronik in eine im Anzeigeelement darstellbare Information gewandelt.

Durch die drahtlose Übertragung zwischen der Mess- und der Anzeigevorrichtung lässt die Mess- und Anzeigevorrichtung große Toleranzen der Lage des ortsfesten zum beweglichen Gehäuseteil zu. Das ortsfeste und das bewegliche Gehäuseteil können auch windschief zueinander angeordnet sein. Da die Übertragungsstrecke über die Trennfuge zwischen dem ortsfesten und dem beweglichen Gehäuseteil keine beweglichen Teile umfasst, ist sie sicher gegen Beschädigungen und übliche Verschmutzungen und erfordert keine Wartung. Der ortsfeste und der bewegliche Gehäuseteil sind z.B. über ein Schwenk- oder ein Schubgelenk miteinander verbunden. Die Mess- und Anzeigevorrichtung kann z.B. sowohl in einem Gehäuse mit rechtsseitigem als auch in einem Gehäuse mit linksseitigem Türanschlag eingebaut werden. Der bewegliche Gehäuseteil kann beispielsweise auch ein Schubfach sein, das einen Teil eines Gehäusedeckels oder einer Tür umfasst.

Für den Fall, dass der Messwertaufnehmer nicht im gleichen Gehäuseteil wie der Messwertumformer angeordnet ist, benötigt die Mess- und Anzeigevorrichtung mindestens ein weiteres Sender/Empfängersystem.

Der Messwertaufnehmer und der Sender können im ortsfesten Gehäuseteil angeordnet sein, während der Empfänger und das Anzeigeelement im beweglichen Gehäuseteil befestigt sein können. Die Übertragung des Messwertes vom Messwertaufnehmer zum Messwertumformer kann dann drahtgebunden innerhalb des ortsfesten Gehäuseteils erfolgen. Ebenso kann der Empfänger mit dem Anzeigeelement fest verdrahtet sei und geschützt im beweglichen Gehäuseteil sitzen.

Der Sender kann in einem am Messwertumformer angebundenen, geschlossenen Stromkreis angeordnet sein. Er ist dann beispielsweise ein Widerstand im Stromkreis, an dem Energie freigesetzt wird. Der Sender kann zum Beispiel ein Elektromagnet oder eine Lichtquelle, z.B. eine IR-Sende-Diode sein. Der Empfänger ist dann entsprechend z.B. ein Reedkontakt oder z.B. eine Photodiode.

Die vom Messwertumformer bereitgestellte messwertabhängige Größe kann eine Folge von Stromimpulsen einer diskreten Stromstärke und einer diskreten Impulslänge sein, deren Folgefrequenz abhängig vom Messwert ist. Zwischen den Impulsen kann die Stromstärke Null sein. Durch die gleichartige Form jedes einzelnen Impulses ist das vom Sender übertragene Signal jedes einzelnen Impulses gleich. Eventuelle Störungen, die die Stromstärke oder die Impulslänge beeinträchtigen würden, sind unkritisch, da diese beiden Parameter keine messwertabhängigen Informationen transportieren.

Der Messwertumformer erzeugt beispielsweise bis zu 10 Impulse pro Sekunde. Die Impulse selbst können somit relativ lang werden. So ist sichergestellt, dass selbst bei extremen äußeren Störungen eine sichere Übertragung zwischen dem festen und dem beweglichen Gehäuseteil gewährleistet ist.

Die Änderung der Folgefrequenz der vom Messwertumformer erzeugten Impulse kann zumindest bereichsweise proportional der Änderung des vom Messwertaufnehmer gemessenen Wertes sein. Die Genauigkeit des dem Sender bereitgestellten Signals ist dann zumindest über den proportionalen Bereich konstant.

Die vom Messwertaufnehmer aufgenommene Messgröße kann eine Temperatur sein. Beispielsweise kann in einem Gefriergerät die Temperatur im Inneren des Gerätes auf ein in der Tür des Gerätes angeordnetes Anzeigeelement übertragen werden.

Die vom Messwertumformer bereitgestellte Größe kann ein Gleichstrom sein, dessen Stromstärke pulsartig verändert wird. Der Sender ist dann beispielsweise eine Spule, in der der sie durchfließende Strom ein Magnetfeld aufbaut. Dieses Magnetfeld wirkt dann auf den der Spule gegenüber angeordneten Empfänger. Die Stärke des Magnetfeldes am Empfänger ist u.a. abhängig von dem die Spule durchfließenden Strom und vom Quadrat des Abstandes zwischen dem Sender und dem Empfänger. Der Empfänger ist in diesem Falle beispielsweise ein Reedkontakt, der unter der Wirkung des Magnetfeldes den Stromfluss in einem Schaltkreis auf der Empfängerseite öffnet und schließt. Hierbei kann der Stromfluss im Schaltkreis des Empfängers im Ruhezustand des Reedkontaktes, bei geöffnetem Kontakt, unterbrochen sein. Sobald der Reedkontakt schließt, wird der Schaltkreis des Empfängers geschlossen. Wird das senderseitige Magnetfeld wieder abgeschwächt oder ganz abgebaut, öffnet der Kontakt wieder. Der Schaltkreis des Empfängers wird wieder unterbrochen. Durch das An- und Ausschalten des Schaltkreises des Empfängers werden die Impulse des Messwertumformers auf den Schaltkreis des Empfängers abgebildet. Die Ansprechschwelle des Reedkontaktes kann so eingestellt werden, dass zu schwache oder störende Signale ausgefiltert werden. Werden beispielsweise vom Messwertumformer aus Impulse gleicher Impulsstärke übertragen, werden diese als Impulse mit der Stromstärke des Schaltkreises des Empfängers und der Impulslänge der von Messwertumformer ausgesandten Impulse abgebildet.

Im beweglichen Gehäuseteil kann eine eigene Energieversorgung angeordnet sein. Diese ist zum Beispiel eine Batterie, ein Akkumulator, ein Kondensator, etc.. Der Empfänger im beweglichen Gehäuseteil ist dann unabhängig von den Einbautoleranzen des beweglichen in das ortsfeste Gehäuseteil und von der Anordnung der Führungselemente zwischen dem ortsfesten und dem beweglichen Gehäuseteil. So lässt sich z.B. ein Wechsel des Türanschlages ohne Umverlegen elektrischer Leitungen verwirklichen. Hierbei kann die Energieversorgung zum Beispiel auch von der Stromversorgung des ortsfesten Gehäuseteils aus gepuffert sein. Bei Verwendung eines Akkumulators kann dessen Ladestrom z.B. durch induktive Auskopplung und Gleichrichtung aus einer Wechselspannungsquelle des ortsfesten Gehäuseteils erzeugt werden.

Wird der Schaltkreis des Empfängers unterbrochen oder werden z.B. nach dem Öffnen einer Tür keinen neuen Signale mehr übertragen, kann die Anzeige den letzten Wert weiterhin anzeigen. Hiermit wird zum Beispiel die zuletzt gemessene Temperatur eines Backofens weiterhin angezeigt, um vor unvorsichtigem Hineingreifen zu warnen. Das Anzeigeelement ist dabei z.B. auch bei geöffneter Tür gut sichtbar angeordnet.

Weitere Einzelheiten der Erfindung ergeben sich aus den Unteransprüchen und der nachfolgenden Beschreibung einer schematisch dargestellten Ausführungsform.

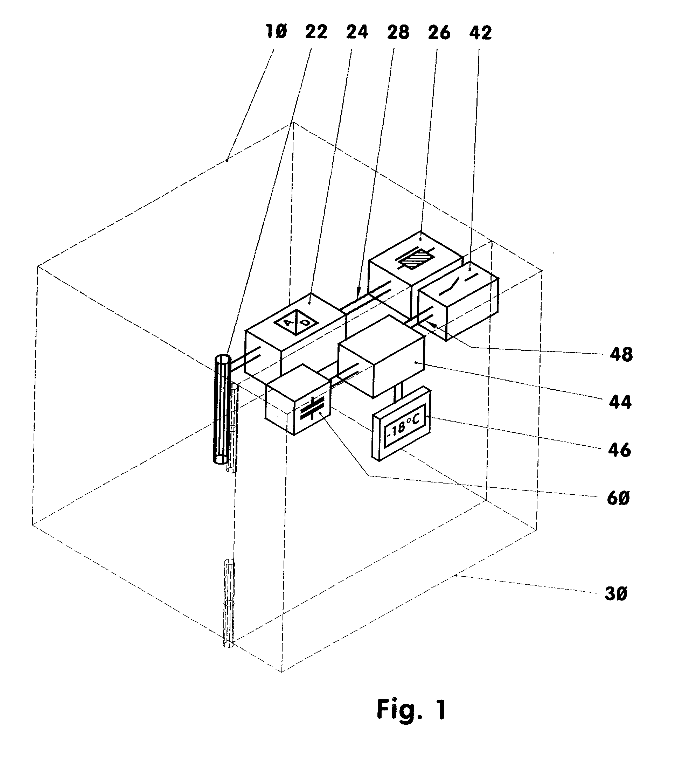

Figur 1: Mess- und Anzeigevorrichtung eines Hausgerätes.

Figur 1 zeigt eine Mess- und Anzeigevorrichtung für ein Hausgerät. Das Hausgerät besteht u.a. aus einem ortsfesten 10 und einem beweglichen Gehäuseteil 30. Letzteres ist beispielsweise eine das Gerät verschließende Tür.

Im ortsfesten Gehäuseteil 10 befinden sich u.a. ein Messwertaufnehmer 22, wie z.B. ein Temperatursensor, ein Messwertumformer 24 und ein Sender 26. Der Sender 26 ist Teil eines geschlossenen Stromkreises 28, der vom Messwertumformer 24 aus gespeist wird. Im beweglichen Gehäuseteil 30 sind u.a. ein Empfänger 42, eine Auswertelektronik 44 und ein Anzeigeelement 46 angeordnet. Der Empfänger 42 ist hierbei in einen von einer Energiequelle 60 gespeisten Schaltkreis 48 eingebunden.

Die vom Messwertaufnehmer 22 aufgenommenen Messwerte, beispielsweise die Temperaturen eines Kühlgerätes, werden ggf. als messwertproportionale Ströme an den Messwertumformer 24 geleitet. Im Messwertumformer 24 werden diese Ströme aufbereitet und als Signale über den Sender 26 an den Empfänger 42 des beweglichen Gehäuseteils 30 übertragen.

Im Empfänger 42 werden die vom Sender 26 empfangenen Signale ausgewertet und als elektrische Größen an die Auswerteelektronik 44 geleitet. Dort werden sie in Ansteuerungssignale für das Anzeigeelement 46 umgewandelt. Im Anzeigeelement 46 wird der vom Messwertaufnehmer 22 ermittelte Wert optisch sichtbar dargestellt. Werden Grenzwerte erreicht, kann beispielsweise außerdem ein akustisches Alarmsignal erzeugt werden.

Im Messwertumformer 24 werden bei der Aufbereitung der vom Messwertaufnehmer 22 übertragenen Ströme letztere im Ausführungsbeispiel in einzelne Gleichstromimpulse gleicher Stärke und gleicher Länge umgewandelt. Die Folgefrequenz dieser Impulse ist abhängig von der vom Messwertaufnehmer 22 gelieferten Stromstärke. Zwischen den Impulsen wird der Strom des Messwertumformers 24 abgesenkt oder unterbrochen. Die Änderung der Impulsfolgefrequenz kann beispielsweise proportional der Änderung der Stromstärke sein, die vom Messwertaufnehmer 22 übertragen wird. Diese Impulse werden auf den Stromkreis 28 aufgebracht. Der Sender 26 in diesem Stromkreis 28 ist eine Spule 26, die einen Eisenkern umfassen kann. Beim Durchfließen der Spule 26 erzeugt der im Stromkreis 28 fließende Strom ein Magnetfeld um die Spule 26.

Der Empfänger 42 ist beispielsweise ein Reedkontakt 42, der unter der Einwirkung des magnetischen Feldes schließt. Dieser Reedkontakt 42 schließt den Schaltkreis 48, in dem jetzt von der Energiequelle 60 aus ein Strom fließt.

Endet der von der Messwertumformer 24 an die Spule 26 gesendete Impuls, bricht das von der Spule 26 erzeugte Magnetfeld zusammen. Beim Unterbrechen der Energieeinstrahlung auf den Reedkontakt 42 im beweglichen Gehäuseteil 30 öffnet der Reedkontakt 42 und unterbricht damit den Schaltkreis 48.

Das Öffnen und Schließen des Reedkontaktes 42 erfolgt mit der Folgefrequenz der von dem Messwertumformer 24 an die Spule 26 übertragenen Impulse. Somit ist auch die Änderung der Folgefrequenz der Impulse im Schaltkreis 48 des Empfängers 42 zum Beispiel proportional der Änderung der am Messwertaufnehmer 22 ermittelten Werte.

Der Schaltkreis 48 ist an die Auswerteelektronik 44 angeschlossen. In der Auswerteelektronik 44 werden die aufgenommenen Impulse mit einem Zählerbaustein gezählt und ein Ansteuerungssignal für das Anzeigeelement 46 erzeugt. Diese Anzeige 46 kann beispielsweise eine digitale Segmentanzeige, eine LCD-Anzeige, eine LED-Anzeige, eine Analoganzeige oder ähnliches sein.

Statt einer drahtlosen magnetischen Signalübertragung kann die Übertragung z.B. auch optisch erfolgen. Beispielsweise wird dann vom Messwertumformer 24 eine Infrarot-Sendediode mit den erzeugten Impulsen angesteuert. Im beweglichen Gehäuseteil 30 empfängt dann z.B. eine Photodiode, ein Phototransistor, etc. das ausgesandte Signal und bildet die vom Sender 26 ausgesandten Impulse auf den Schaltkreis 48 ab.

Der beweglichen Teil 30 verfügt über eine eigene Energiequelle 60, die getrennt ist von der Energieversorgung des Hausgerätes. Dies kann z.B. eine Batterie, ein Akkumulator oder ähnliches sein. Diese Energiequelle 60 versorgt dann sowohl den Schaltkreis 48 des Empfängers 42 als auch u.a. das Anzeigeelement 46.

## Patentansprüche

1. Mess- und Anzeigevorrichtung eines Hausgerätes, wobei das Hausgerät einen ortsfesten und mindestens einen beweglichen Gehäuseteil umfasst, wobei die Mess- und Anzeigevorrichtung mindestens einen Messwertaufnehmer, mindestens einen Messwertumformer, mindestens eine Auswerteelektronik und mindestens ein Anzeigeelement umfasst, **dadurch gekennzeichnet,**
- **dass** eine vom Messwertumformer (24) bereitgestellte messwertabhängige Größe einem Sender (26) zugeführt wird,
- **dass** gegenüber des Senders (26) am anderen Gehäuseteil ein Empfänger (42) angeordnet ist, wobei der Sender (26) durch eine von der messwertabhängigen Größe gesteuerte Energieabstrahlung unmittelbar auf den Empfänger (42) wirkt und
- **dass** die vom Empfänger (42) drahtlos empfangene Energieeinstrahlung in der Auswerteelektronik (44) in eine im Anzeigeelement (46) darstellbare Information gewandelt wird.

2. Mess- und Anzeigevorrichtung nach Anspruch 1, **dadurch gekennzeichnet, dass** mindestens der Messwertaufnehmer (22) im ortsfesten Gehäuseteil (10) angeordnet ist, während mindestens das Anzeigeelement (46) im beweglichen Gehäuseteil (30) befestigt ist.

3. Mess- und Anzeigevorrichtung nach Anspruch 1 und 2, **dadurch gekennzeichnet, dass** der Sender (26) im ortsfesten Gehäuseteil (10) und der Empfänger (26) im beweglichen Gehäuseteil (30) angeordnet ist.

4. Mess- und Anzeigevorrichtung nach einem der vorangehenden Ansprüche, **dadurch gekennzeichnet, dass** der Sender (26) in einem am Messwertumformer (24) angebundenen, geschlossenen Stromkreis (28) angeordnet ist.

5. Mess- und Anzeigevorrichtung nach einem der vorangehenden Ansprüche, **dadurch gekennzeichnet, dass** die vom Messwertumformer (24) bereitgestellte messwertabhängige Größe eine Folge von Stromimpulsen gleicher Stromstärke und gleicher Impulslänge ist, deren Folgefrequenz vom Messwert abhängig ist.

6. Mess- und Anzeigevorrichtung nach Anspruch 5, **dadurch gekennzeichnet, dass** der Messwertumformer (24) weniger als 10 Impulse pro Sekunde erzeugt.

7. Mess- und Anzeigevorrichtung nach Anspruch 5, **dadurch gekennzeichnet, dass** die Änderung der Folgefrequenz der vom Messwertumformer (24) bereitgestellten Signale zumindest bereichsweise proportional der Änderung der vom Messwertaufnehmer (22) aufgenommenen Größe ist.

8. Mess- und Anzeigevorrichtung nach einem der vorangehenden Ansprüche, **dadurch gekennzeichnet, dass** die Messgröße eine Temperatur ist.

9. Mess- und Anzeigevorrichtung nach einem der vorangehenden Ansprüche, **dadurch gekennzeichnet, dass** die vom Messwertumformer (24) bereitgestellte messwertabhängige Größe ein pulsierender Gleichstrom ist, der beim Durchfluss durch den Sender (26) ein pulsierendes magnetisches Feld erzeugt, und dass die auf den Empfänger (42) wirkende Energieabstrahlung ein entsprechendes Pulsieren des empfängerseitigen Schaltkreises (48) bewirkt.

10. Mess- und Anzeigevorrichtung nach einem der vorangehenden Ansprüche, **dadurch gekennzeichnet, dass** im beweglichen Gehäuseteil (30) eine eigene Energiequelle (60) angeordnet ist.
